(19) **Europäisches Patentamt**
**European Patent Office**
**Office européen des brevets**

(11) Veröffentlichungsnummer: **0 652 427 A1**

(12) **EUROPÄISCHE PATENTANMELDUNG**
veröffentlicht nach Art. 158 Abs. 3
EPÜ

(21) Anmeldenummer: 94905612.1

(51) Int. Cl.⁶: **G01N 11/00**

(22) Anmeldetag: **22.07.93**

(86) Internationale Anmeldenummer:
**PCT/RU93/00172**

(87) Internationale Veröffentlichungsnummer:
**WO 94/01989 (03.02.94 94/04)**

(30) Priorität: **22.07.92 RU 5579025**

(43) Veröffentlichungstag der Anmeldung:
**10.05.95 Patentblatt 95/19**

(84) Benannte Vertragsstaaten:
**DE FR GB NL**

(71) Anmelder: **VSEROSSIISKY
NAUCHNO-ISSLEDOVATELSKY INSTITUT
pos. Razvilka, Leninsky raion
Moskovskaya obl., 142717 (RU)**

(72) Erfinder: **ASOSYAN, Karen Vartgesovich
ul. Ramenki, 25-3-733
Moscow, 117607 (RU)**
Erfinder: **BELONENKO, Vladimir Nikolaevich
pos. Razvilka, 10-6
Leninsky raion
Moskovskaya obl., 142717 (RU)**
Erfinder: **MAKEEV, Boris Vasilievich
ul. Dekabristov, 29-235
Moscow, 127490 (RU)**
Erfinder: **MOROZOV, Mikhail Alexeevich
g. Puschino, m/r "D", 6-31
Serpukhovsky r-n
Moskovskaya obl., 142292 (RU)**
Erfinder: **SARVAZYAN, Armen Paruirovich
g. Puschino, m/r "AB", 9-36
Serpukhovsky r-n
Moskovskaya obl., 142292 (RU)**

(74) Vertreter: **Sparing - Röhl - Henseler
Patentanwälte
Postfach 14 04 43
D-40074 Düsseldorf (DE)**

(54) **EINRICHTUNG ZUR ERREGUNG VON SCHWINGUNGEN UND BESTIMMUNG VON EIGENSCHAFTEN VERSCHIEDENER MEDIEN.**

(57) Verwendung: Bestimmung von kritischen Parametern und physikalisch-chemischen Eigenschaften verschiedener Medien, beispielsweise von Viskosität, Viskoelastizität, Dichte, Feuchtigkeit u. dgl. Wesen der Erfindung: die Einrichtung enthält einen in einem Gehäuse untergebrachten Oszillator mit Elektroden, einen Computer enthaltende Mittel zur Erregung von Schwingungen, zum Abgriff, zur Registrierung und Verarbeitung von Signalen, wobei die Befestigung des Oszillators mit Hilfe von Kugeln mit einer elektrisch leitenden Oberfläche erfolgt und der Oszillator in einem Halter relativ zu den Kugeln verschiebbar gelagert ist. Der Oszillator kann in verschiedenen Varianten, z.B. als Zylinder, Scheibe, Stab, Platte, Kugel, ausgebildet werden; er kann hohl sein und einen Steg sowie Elemente enthalten, welche seine Nutzfläche vergrößern. Die Einrichtung ist mit einem Hochdruckgefäß ausgestattet und wird auch bei hohen Drücken eingesetzt.

Die Erfindung bezieht sich auf das Gebiet der Untersuchung und Analyse von Materialien und kann zur Bestimmung von kritischen Parametern und physikalisch-chemischen Eigenschaften, insbesondere des viskoelastischen Verhaltens verschiedener Medien in der Erdöl- und Erdgasindustrie, in der petro - chemischen Industrie und Chemieindustrie, in der Biologie, Biochemie, Medizin u.dgl. angewendet werden.

Es ist eine Einrichtung zur Bestimmung von Parametern eines flüssigen Mediums und zur Beobachtung ihrer Änderungen bekannt, die eine an einem Torsionsfaden befestigte Schwinge enthält, welche von einem Elektromagnetantrieb geschaukelt wird und einen fotoelektrischen Winkelverschiebungsgeber an einem der Arme der Schwinge und ein Bremselement an dem gegenüberliegenden Arm trägt, welches in das zu untersuchende flüssige Medium getaucht ist (FR-Anmeldung Nr. 2620226, G 01 N 11/14, 1989). Der komplizierte mechanische Teil, die niedrige Empfindlichkeit, der unmögliche Einsatz der in Rede stehenden Einrichtung bei Drücken, die vom atmosphärischen Druck verschieden sind, sowie die lange Dauer des Meßvorgangs bestimmen die Nachteile der Einrichtung voraus.

Bekannt ist eine Einrichtung zur Bestimmung von Parametern eines flüssigen Mediums, die einen an einem Träger befestigten piezoelektrischen Antrieb enthält, der über ein dielektrisches Element mit einem Piezoempfänger mit einem Faden verbunden ist, welcher eine Kugel trägt, die in das zu untersuchende flüssige Medium getaucht ist, das sich in einem zu thermostatisierenden Gefäß befindet (US-PS Nr. 4799378, Kl. G 01 N 11/16, 1989). Zu den Nachteilen dieser Einrichtung gehören komplizierter Aufbau, unmögliche Untersuchungen bei hohen Drücken, niedrige Güte.

Es ist eine Einrichtung zur Bestimmung von Parametern eines flüssigen Mediums bekannt, die einen einseitig und starr befestigten hohlen Oszillator, einen Antrieb, der seine Schwingungen gleichzeitig in verschiedenen Zuständen hervorruft, und Mittel zur Detektion von Schwingungen enthält, wobei der Antrieb und die Detektionsmittel als piezoelektrische Elemente ausgebildet sind (angenommene JA-Anmeldung Nr. 67-7251, Kl. G 01 N 9/00, 1986). Eine solche Konstruktion hat begrenzte Möglichkeiten und wird hauptsächlich nur zur Dichtemessung verwendet. Die Einrichtung weist auch eine niedrige Empfindlichkeit auf.

Bekannt ist eine Einrichtung zur Bestimmung von Parametern eines flüssigen Mediums, enthaltend ein in dieses Medium getauchtes hohles Rohr, einen mit diesem starr verbundenen piezoelektrischen Antrieb und ein Fühlelement (EP-Anmeldung Nr. 0297032, Kl. G 01 N 11/16, 1985). Nachteilig bei ihr sind Trägheit, niedrige Genauigkeit und niedrige Empfindlichkeit.

Den Prototyp bildet eine Einrichtung zur Bestimmung von Eigenschaften verschiedener Medien, enthaltend einen in einem Stromanschlüsse aufweisenden Gehäuse untergebrachten Oszillator, der in einem Halter mit Befestigungselementen, die zum Andrücken an den Oszillator dienen, fixiert ist, an der Oberfläche angebrachte Elektroden, die mit den Stromanschlüssen verbunden sind, einen Block zur Erregung von Schwingungen des Oszillators sowie zum Abgriff und zur Registrierung von Signalen (Izmeritelnaya tekhnika /Meßtechnik/ Nr.8, 1970, SS. 78-81). Bei dieser Einrichtung sind die Befestigungselemente des Oszillators als Fäden oder Messer, die an die Seitenflächen des Oszillators durch flache Federn angedrückt werden, oder als Nadeln ausgebildet, welche an seine Stirnfläche angedrückt sind. Bei der Befestigungsart mittels Nadeln entsteht eine Reibung zwischen den Oberflächen des Oszillators und den Nadeln, während bei Verwendung von- Messern oder Fäden die Linie mechanischer Nullschwingungen und die den Oszillator haltende Messerkante oder der Faden ungenau in Übereinstimmung gebracht werden. Von Nachteil sind auch nicht technologiegerechte Montage und Abstimmung, weil die Nithtrechtwinkligkeit von Messern oder die Nichtkoaxilität von Nadeln und Oszillatoroberflächen unvermeidlich sind. Mechanische Beschädigungen des Oszillators bei ungleichmäßigem Andrücken verschlechtern seine Parameter.

Auch werden beim Prototyp die elektromechsnischen Parameter mit Hilfe einer Brückenschaltung bestimmt, die ein Frequenzmeßgerät und einen Oszillografen einschließt, was einen Nachteil der Einrichtung bildet, da hierdurch ihr Einsatzgebiet wegen der Sperrigkeit und der notwendigen Netzspeisung eingeengt und eine beschränkte Meßgenauigkeit bedingt werden, weil eine visuelle Beobachtung von Resultaten an der Elektronenstrahlröhre des Oszillografen erforderlich ist. Außerdem wird der Oszillator durch einen Funkimpulsgenerator durch Stoßerregung angeregt, d.h. nicht nur auf der Grundfrequenz, sondern auch auf Harmonischen, was zu einer wesentlichen Senkung der Genauigkeit führt und die Auswertung von Resultaten erschwert.

Die Gesamtheit der dargelegten Nachteile führt zu inkonstanten Anzeigen, einer niedrigen Güte und als Folge davon zu einer für genaue Messungen unzureichenden Empfindlichkeit und einem großen Meßfehler bei Messungen von Parametern und Eigenschaften flüssiger Medien sowie macht die Gewinnung von einigermaßen relevanten Ergebnissen für gasförmige Medien faktisch unmöglich.

Die Aufgabe, auf deren Lösung die Erfindung abzielt, besteht in der Gewährleistung von Präzisionsmessungen sowohl in Flüssigkeiten als auch in gasförmigen Medien durch Erhöhung der Güte des Oszillators, seiner Empfindlichkeit, der Anzeigekonstanz.

Die gestellte Aufgabe ist dadurch gelöst, daß in der Einrichtung zur Erregung von Schwingungen und Bestimmung von Eigenschaften verschiedener Medien, enthaltend einen Oszillator, der in einem Stromanschlüsse aufweisenden Gehäuse untergebracht und in einem Halter mit Elementen zum Befestigen desselben und zum Andrücken an ihn fixiert ist, an der Oberfläche angeordnete Elektroden, die mit den Stromanschlüssen verbunden sind, Mittel zur Erregung von Schwingungen des Oszillators, zum Abgriff und zur Registrierung von Signalen, erfindungsgemäß die Befestigungselemente des Oszillators als Kugeln ausgebildet sind, während ihr Andrücken mittels einer Scheibe erfolgt, wobei die Kugeln eine elektrisch leitende Oberfläche aufweisen und durch die Scheibe an die Elektroden angedrückt sind.

In allen Fällen der Ausübung der Erfindung ist die genannte Gesamtheit von wesentlichen Merkmalen ausreichend, weil die Kugeln einen die Reibung vermindernden punktförmigen Kontakt mit der Resonatoroberfläche gewährleisten und zugleich Verbindungsstelle der Elektroden mit den Stromanschlüssen sind, was die bei der Charakteristik des Prototyps angegebenen Nachteile ausschließt, d.h. die Güte der Einrichtung, ihre Anzeigekonstanz und Empfindlichkeit erhöht, und eine Erweiterung der Zusammensetzung von zu untersuchenden Medien ermöglicht.

In einigen Fällen der Ausübung der Erfindung ist der Oszillator ganz aus Piezokristall oder mit separaten Schwingungswandlern ausgeführt, die an seinen Seiten- oder Stirnflächen angeordnet oder in den Oszillatorkörper eingebaut sind. Die Wandler können aus Piezoelementen bestehen. Sie können die gesamte Oberfläche des Oszillators erfassen. Der Oszillator wird zylindrisch (als Scheibe) oder sphärisch, massiv oder hohl, hohl mit einem innenliegenden Steg, der auch eine Öffnung aufweisen kann, ausgebildet. Der Oszillator wird auch in beliebigen anderen Formen, darunter auch kombiniert, je nach den an ihn gestellten Forderungen und Betriebsbedingungen, beispielsweise in Form von Konzentratoren ausgeführt /"Ultrazvuk: malaya entsiklopedia" /Ultraschall: kleine Enzyklopädie/ unter Redaktion von I.P.Golyamina, Verlag SE, M., 1979, S. 171, S. 289).

Der Steg wird auch an der Stelle der Linien von mechanischen Nullschwingungen ausgeführt. Bei Vorhandensein des Steges können die Kugeln diesem gegenüber angeordnet werden. Das Verhältnis des Durchmessers der Kugeln zum Durchmesser eines zylindrischen Oszillators kann im Bereich $1\times10^{-2} \ldots 5\times10^{-1}$ und das Verhältnis des Kugeldurchmessers zur Oszillatorlänge im Bereich von $3\times10^{-3}$ bis $3\times10^{-1}$ festgesetzt werden. Bei kleineren Verhältnissen wird die Befestigung unhandlich, bei größeren Verhältnissen werden aber die Abmessungen der Einrichtung ungerechtfertigt vergrößert. Es können Torsionsschwingungen, Längsschwingungen u.a. in einem ununterbrochenen Betrieb, einem Impulsbetrieb und in anderen Betriebszuständen erregt werden. Das Andrücken der Kugeln erfolgt an Stellen, die den Schwingungsknoten entsprechen.

Zwecks Abstimmung wird der Oszillator längs der Kugeln verschiebbar gelagert. Die Kugeln und Scheiben können auch im Inneren des Oszillators angeordnet sein. Die Oberflächen der Kugeln und Elektroden außer ihren Kontaktstellen können isoliert sein. Darüber hinaus kann an einer der Stirnseiten des Gehäuses eine elastische druckübertragende Trennwand befestigt sein, die das zu untersuchende Medium von dem äußeren Medium trennt.

Die Einrichtung ist auch mit einem Hochdruckgefäß mit elektrischen Durchführungen, die mit den Stromanschlüssen des Gehäuses verbunden sind, und mit einem Dichtungsdeckel oder mit Löcher aufweisenden Deckeln, die mit einem Feuchtigkeitsabsorber oder einem Filter bestückt sind, ausgestattet.

Die Mittel zur Erregung von Schwingungen, zur Abnahme und Registrierung der Information enthalten: einen Vorverstärker-Kompensator, der ein Signal vom Geber empfängt, dieses verstärkt und den direkten Durchlauf eines Störsignals korrigiert, mit ihm in Reihe geschaltet : ein Phasendrehglied mit einem eingebauten System der sprungartigen Phasenverschiebung, welches die Phasenentzerrung in der Rückkopplungsschleife ausführt, und ein System der automatischen Verstärkungsregelung (AVR), welches das Signal am Ausgang des Vorverstärker-Kompensators durch Änderung des Signals am Eingang eines Integrators konstant hält, dessen Ansgangssignal als Eingangssignal für den Oszillator dient; außerdem erfüllt der Integrator die Funktion einer zusätzlichen Phasenschiebereinrichtung zur Erzielung einer summarischen Phasenverschiebung in der Rückkopplungsschleife gleich Null. Zur Signalregistrierung enthält die Einrichtung einen Diskriminator, der das Signal vom Ausgang des Verstärker-Kompensators in binäre Form umwandelt, welche das Signal in ein Meß- und Steuerungssystem (Block), abgekürzt MSB, einzuführen erlaubt, mit dessen Hilfe die Signalfrequenz gemessen sowie ein Befehl in in das Phasendrehglied zur sprungartigen Phasenänderung in der Rückkopplungsschleife gegeben wird. Seinerseits ist das Meß- und Steuerungssystem in eine ERM mit Programmierunterstützung (PU) eingebaut und liefert der ERM entsprechende Signale zu deren Weiterverarbeitung.

Die beschriebene Einrichtung gestattet es, die Resonanzfrequnz ( f ) und die Güte ( Q ) zu bestimmen, die zweckmäßig als Größe $\Delta\phi$ darzustellen ist, wo $\Delta\phi = \Delta\phi c - \Delta\phi o$, während $\Delta\phi c$ die Differenz zwischen der Resonanzfrequenz und der Eigenfrequenz bei festgelegter Phasenverschiebung in dem zu untersuchenden Medium und $\Delta\phi o$ dieselbe im Vakuum ist. Die Größe $\Delta\phi o$ ist mit dein Oszillstorgüte durch die Beziehung

$$Q = \frac{f}{2\Delta\varphi}$$

verbunden.

In den beigefügten Zeichnungen zeigt:

Fig.1 das Prinzipschaltbild eines Mittels zur Erregung von Schwingungen, zur Abnahme und Registrierung der Information;

Fig.2 das Schema der Anordnung des Oszillators in einem Hochdruckgefäß;

Fig.3 eine Ausführungsvariante der Fixierung des Oszillators,

Fig.4 - 12 mögliche Ausführungsformen der Oszillatoren;

Fig.13 die Baueinheit zur Einführung eines zu untersuchenden Mediums;

Fig.14 das Schema der Anordnung des Halters innerhalb des Oszillators;

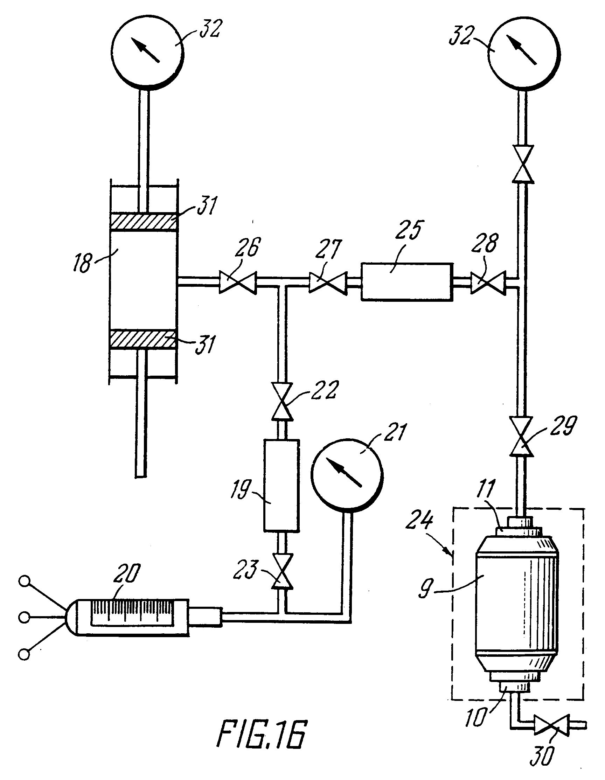

Fig.15 das Schema der Trennung des zu untersuchenden Mediums von dem äußeren Medium;

Fig.16 das Schema eines Standes zur Untersuchung von Kohlenwasserstoffmedien;

Fig.17 die aufgrund von Untersuchungsergebnissen dargestellte graphische Abhängigkeit der Viskosität von Methan vom Druck bei der Temperatur 20°C;

Fig.18 die graphische Abhängigkeit der Resonanzfrequenz des Oszillators von dor Dichte des zu untersuchenden Mediums;

Fig.19 die graphische Abhängigkeit der Dichte des weiten Schnitts von Kohlenwasserstoffen von der Größe $\Delta\phi$.

Fig.20 die graphische Darstellung der Druckabhängigkeit für Äthan bei der Temperatur 20°C;

Fig.21 die Änderung der Größe $\Delta\phi$ vom Druck für ein Mehrkomponentengemisch bei der Temperatur 20°C.

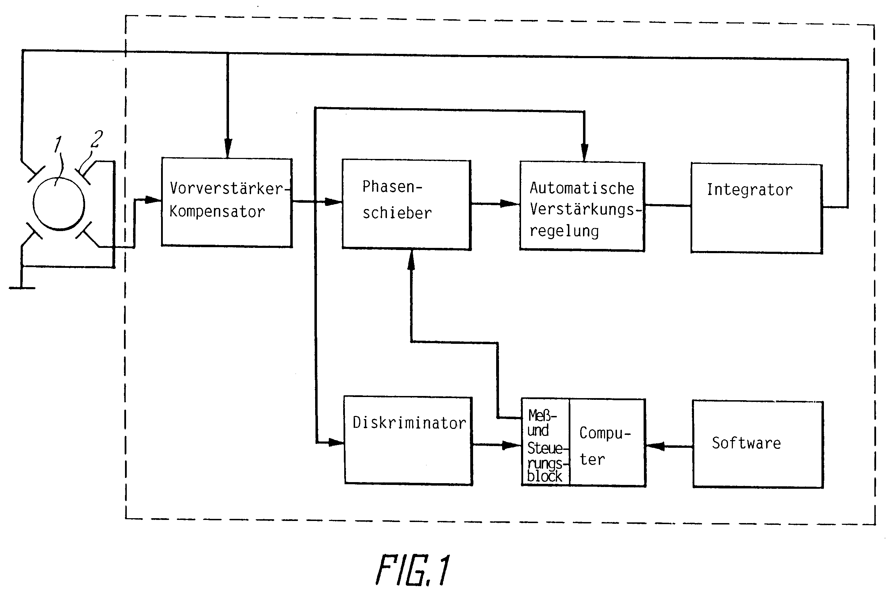

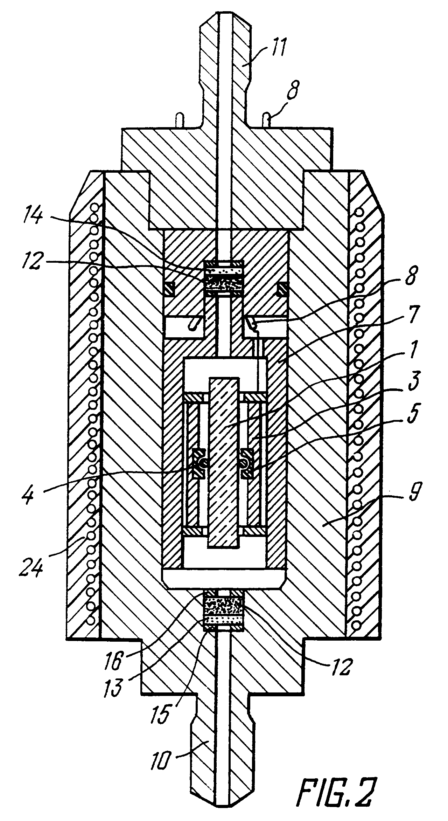

Die in den Figuren 1, 2 dargestellte Einrichtung enthält einen Oszillator 1, der z.B. aus Piezoquarz des X-Schnittes in Form eines Zylinders mit auf ihn durch Vakuumbedampfung aufgebrachten Elektroden 2 ausgeführt ist. Der Oszillator 1 ist in einem Halter 3 unter Belassung eines Spaltes mittels einer dielektrischen Scheibe 5 angeordnet, die Kugeln 4 durch eine Überwurfmutter 6 an die Elektroden 2 andrückt. Die elektrisch leitenden Oberflächen der Kugeln 4 sind über elektrische Kontakte an die elektrischen Durchführungen 7 eines hermetisch abgeschlossenen dickwandigen zu thermostatisierenden Hochdruckgefäßes 9 mit Stutzen 10 und 11 und zusammengesetzten Filtern 12 angeschlossen, welche aus einer Querschicht porösen Materials, einem Feuchtigkeitsabsorber 13 und einer porösen Membran 14, die quer oder gleichachsig mit den Öffnungen der Stutzen 10 und 11 angeordnet sind, sowie aus sie verbindenden Elementen 15 und 16 bestehen.

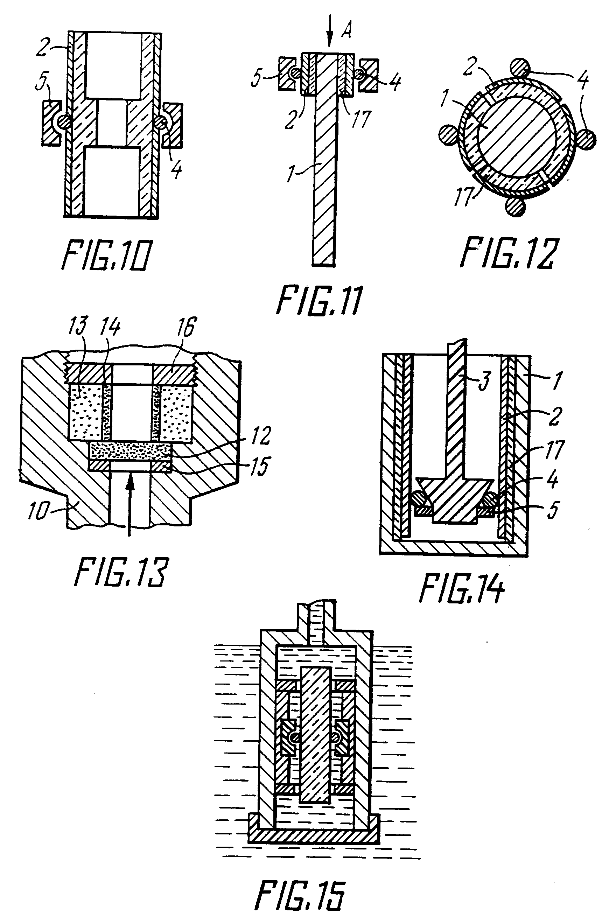

Der Oszillator 1 kann auch gemäß Fig.5-8, 10 hohl ausgebildet sein, was die Kontaktfläche mit den zu untersuchenden Medium vergrößert, oder er kann gemäß Fig.6,7,10 einen Steg (blind oder mit Löchern) aufweisen, wodurch das zu untersuchende Medium im Inneren des Oszillators 1 aufgenommen werden kann. Auch wird der Steg in der Mitte der Lange des Oszillators 1 (Fig.7) ausgeführt, was dem hohlen Oszillator die erforderliche Steifigkeit verleiht und die Dicke seiner Wand zu verringern erlaubt.

Der Oszillator kann aus einem anderen Material als vorstehend angegeben bestehen. In diesen Fall werden Piezokristallelemente 17 an der Oberfläche des Oszillators 1 in Form von abgesonderten Elementen gemäß Fig.9 oder in Form einer durchgehenden Hülle gemäß Fig.8 befestigt. Dies ermöglicht es, auch die Schwingungsformen des Oszillators in weiten Grenzen zu variieren.

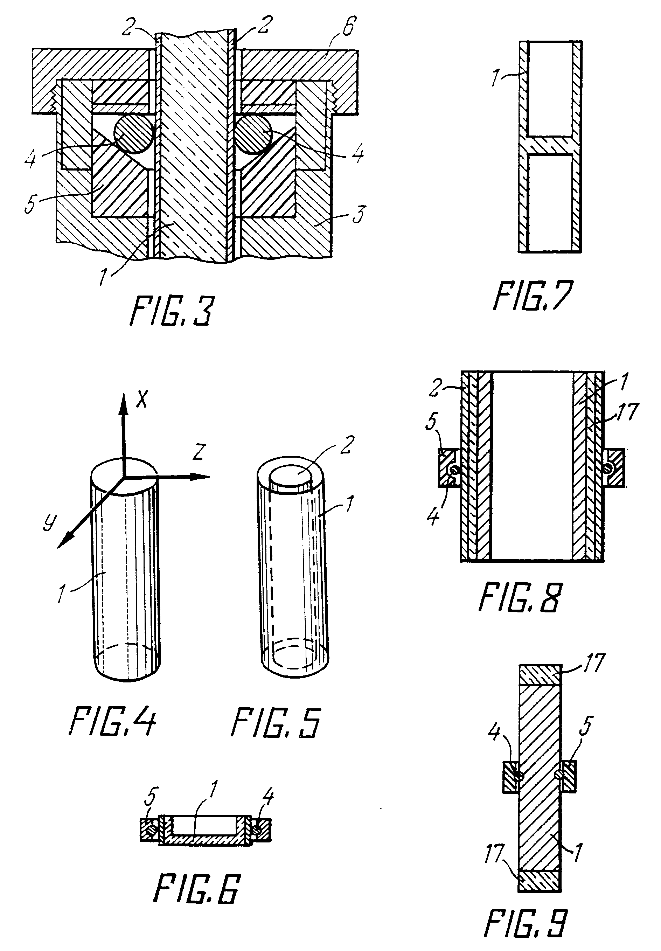

Bei Untersuchung von elektrisch leitenden Medien werden die Kugeln und Elektroden mit Ausnahme ihrer Kontaktstellen mit einer monomolekularen Schicht des Silikonfilmes oder eines anderen Dielektrikums isoliert, dessen elastische Eigenschaften geringe Güterverluste bedingen. Bei der hohlen Ausbildung des Oszillators kann der Halter 3 in Hohlraum des Oszillators (Fig.14) untergebracht werden. Die aufgezählten Ausführungsformen der Oszillatoren 1 (Fig.4-11) bieten die Möglichkeit, die Einrichtung für Untersuchungen des einen oder des anderen Mediums unter diesen oder jenen Bedingungen adäquat einzusetzen. Auch ist es zweckmäßig, beispielsweise zur Bestimmung des räumlichen viskoelestischen Verhaltens eines Mediums den Oszillator in Form einer Kugel Zu verwenden.

Zur Erzielung der geforderten Kennlinien der Einrichtung nimmt man eine Justierung der Lege des Oszillators 1 vor, die dessen höchste Güte sicherstellt. Dazu führt man den Elektroden 2 eine Erregersrannung zu und nimmt Amplituden-Frequenz-Cherakteristiken (AFC) und Phasen-Frequenz-Charakteristiken (PFC) auf. Zügig ändert man die Kontaktstellen der Kugeln 4 mit der Oberfläche der Elektroden 2 durch axiale Verschiebung des Oszillators 1 in der Nähe der Linie von mechanischen Nullschwingungen. Nach AFC und PFC findet man eine optimale gegenseitige Anordnung der erwähnten Elemente, die der maximalen Güte entspricht, dann drückt man die Kugeln 4 mittels der Scheibe 5 an die Oberfläche der Elektroden an, findet die optimale Andrückkraft nach den Charakteristiken AFC und PFC, die dem Spitzenwert der Güte und der Anzeigekonstanz in Kombination mit der starren Befestigung entsprechen.

Die Untersuchung von Medien mit Hilfe der Erfindung führt man beispielsweise an einem Stand gemäß Fig.16 durch, der ein Gefäß 18 für PVT-Verhältnisse zur Aufbereitung von Mehrkomponentengemischen, abnehmbare, auswechselbare Behälter 19, eine Handpresse 20 mit einem Manometer 21 und Ventile 22 und 23 umfaßt. Das Hochdruckgefäß 9 der Einrichtung besitzt einen thermostatisierbaren Mantel 24 und ist über ein Filter 25 und Ventile 26,27,28,29 mit dem Gefäß 18 und dem Behälter 19 verbunden. An den Stutzen 10 des Hochdruckgefäßes ist ein Ventil 30 angeschlossen. Das Gefäß 18 für PVT-Verhältnisse stellt einen thermostatisierbaren Zylinder mit Kolben 31 dar, deren Bewegung mit Hilfe einer Druckflüssigkeit - des Diäthylenglykols - zustandekommt, und weist ein Manometer 32 und (in Fig.16 nicht gezeigte) Sichtfenster zur visuellen Beobachtung des Phasenzustandes des Mehrkomponentengemisches zwecks zusätzlicher Kontrolle auf. Die Presse gewährleistet einen Solldruck des zu untersuchenden Mediums bzw. des Arbeitsmediums im Behälter 19. Das Filter 25 sorgt für die Reinigung des zu untersuchenden Mediums von Wasserdämpfen und anderen in Wasser aufgelösten Komponenten, insbesondere von Diäthylenglykol-Dämpfen. Das auf die Untersuchung vorbereitete Medium führt man über das Ventil 29 dem Hochdruckgefäß 9 mit dem Oszillator 1 zu und hält innerhalb desselben Solldruck und -temperatur aufrecht.

Die Messung nimmt man folgendermaßen vor: in das Gefäß 9 führt man das zu untersuchende Medium ein und mißt die Resonanzfrequenz des Oszillators, dann führt man dem Phasendrehglied (Fig.1) ein Phasensprungsignal zu und mißt die Eigenfrequenz des Systems bei festgelegter Phasenverschiebung in der Rückkopplungsschleife. Man bestimmt die Differenz zwischen der Resonanzfrequenz und der Eigenfrequenz bei festgelegter Phasenverschiebung. Diese Differenz stellt die Halbwertsbreite des Durchlaßbereichs des Oszillators dar. Man berechnet die Differenz der Halbwertsbreite des Oszillators in dem zu untersuchenden Medium und im Vakuum. Nach dieser Differenz urteilt man über den Beitrag des zu untersuchenden Mediums zur Halbwertsbreite des Durchlaßbereichs des Oszillators. Nach den zu messenden Charakteristiken bestimmt man nach der Eichung eine Reihe der Eigenschaften der zu untersuchenden Medien und ihrer Zustandsparameter: Viskosität, Dichte, Relaxationszeit, Komponentenzusammensetzung, Gasphasengehalt in der Flüssigkeit, viskoelastisches Verhalten von Flüssigkeiten und elastischen Oberflächen usw. Möglich ist die Bestimmung von Druck und Temperatur. Die Einrichtung gestattet es, Messungen sowohl in Gasen als auch in Flüssigkeit durchzuführen, Phasenübergänge, Kondensations- und Verdampfungsprozesse zu untersuchen, den Taupunkt zu bestimmen. Die Einrichtung hat ein breiteres Spektrum von Möglichkeiten und Anwendungen als der Prototyp. Der Prototyp bietet z.B. keine Möglichkeit, Messungen in Gasen vorzunehmen, feine physikalische Prozesse und kritische Erscheinungen zu untersuchen.

Die Möglichkeiten der Einrichtung und dem Komplex von zu messenden Eigenschaften werden unter gleichzeitiger Erhöhung der Genauigkeit und Empfindlichkeit wesentlich erweitert, wenn zwei und mehr Oszillatoren eingesetzt werden, die in den Haltern mittels Kugeln befestigt sind und über beispielsweise einen Umschalter an die Mittel zur Schwingungserregung, zur Abnahme und Registrierung von Signalen gemäß der Schaltung in Fig. 1 angeschlossen sind.

Der punktförmige Kontakt der Kugeln mit den Elektroden und die Zusammenlegung der Stellen der Spannungszufuhr und -abnahme mit den Befestigungsstellen des Oszillators machen es möglich, Gütewerte wesentlich zu steigern und Anzeigen zu stabilisieren, d.h. auf Änderungen in dem zu untersuchenden Medium in einem früheren Stadium ihrer Entstehung zu reagieren.

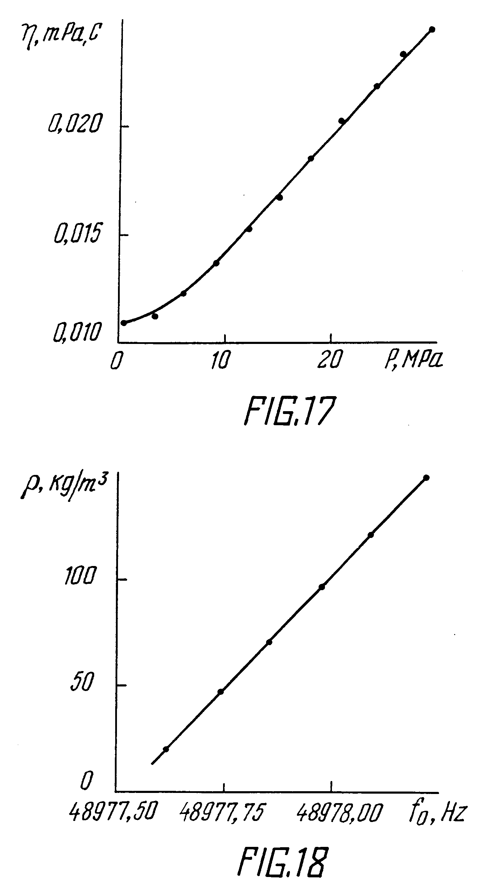

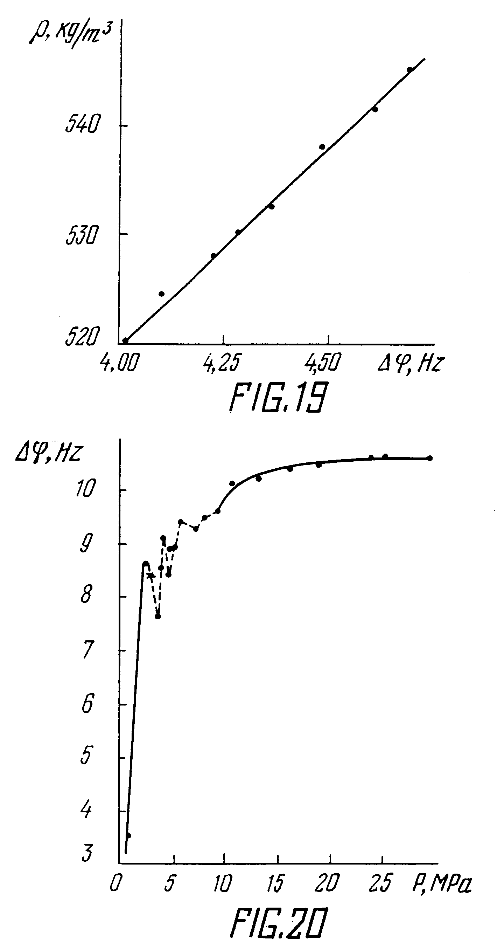

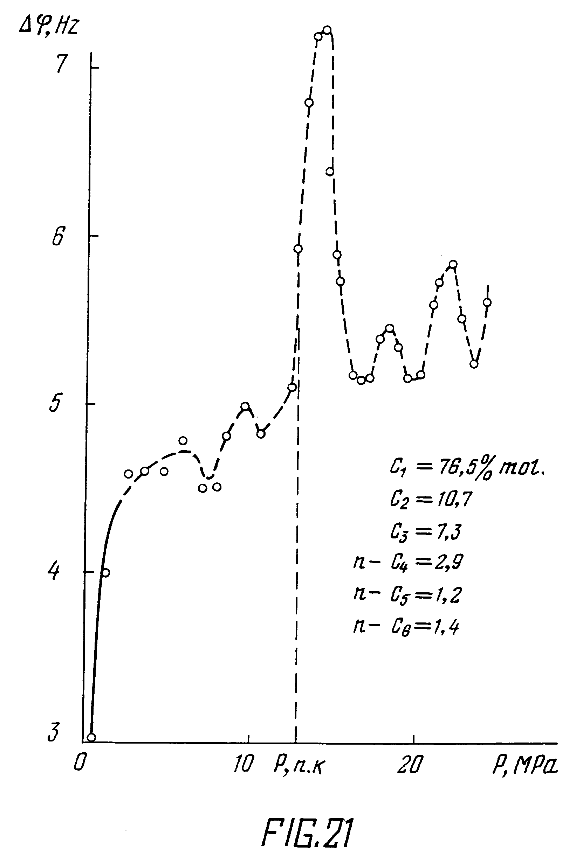

Untersuchungsergebnisse, welche das mit der Erfindung erreichbare technische Resultat zeigen, sind in Schaubil dern der Figuren 17 bis 21 dargestellt. Der punktförmige Kontakt, der die Empfindlichkeit erhöht, gestattet eine Verkleinerung des Oszillatordurchmessers, während durch das Vorhandensein eines elektrisch leitenden Materials auf der Kugeloberfläche es möglich wird, die Funktion des Halters mit der Funktion der Spannungsübertragung zu vereinen, d.h. die Anzahl von zur Einrichtung gehörenden Elementen zu reduzieren und damit die Betriebsstabilität, -zuverlässigkeit und -genauigkeit der Einrichtung sicherzustellen. Außerdem wird die Funktion des Halters nicht nur mit der Funktion der Spannungsübertragung, sondern auch mit der Funktion der Reibungsverminderung in der Befestigungsbaugruppe des Oszillators vereinigt, was die Möglichkeiten der Einrichtung wesentlich erweitert und bei deren Einsatz für Messungen in wenig viskosen Medien besonders wichtig ist.

Somit besitzt die Einrichtung hohe Empfindlichkeit, Genauigkeit, Anzeigekonstanz und -zuverlässigkeit, einfache Abstimmung und technologiegerechte Konstruktion. Dies bietet die Möglichkeit, die Einrichtung für Messungen von thermodynamischen, physikalisch-chemischen, rheologischen, mechanischen und anderen Eigenschaften in weitem Bereich der Änderungen von Zustandsparametern zu verwenden, kritische Erscheinungen, konzentrationsabhängigkeiten usw. zu untersuchen.

**Patentansprüche**

1. Einrichtung zur Erregung von Schwingungen und Bestimmung von Eigenschaften verschiedener Medien, enthaltend einen Oszillator, der in einem Stromanschlüsse aufweisenden Gehäuse untergebracht und in einem Halter zum Befestigen desselben und zum Andrücken an ihn fixiert ist, an der Oberfläche angeordnete Elektroden, die mit den Stromanschlüssen verbunden sind, Mittel zur Erregung von Schwingungen, zum Abgriff und zur Registrierung von Signalen, dadurch gekennzeichnet, daß die Befestigungselemente des Oszillators als Kugeln ausgebildet sind, während ihr Andrücken mittels einer Scheibe erfolgt, wobei die Kugeln eine elektrisch leitende Oberfläche aufweisen und durch die Scheibe an die Elektroden angedrückt sind.

2. Einrichtung nach Anspruch 1, dadurch gekennzeichnet, daß der Oszillator aus Piezokristall besteht.

3. Einrichtung nach Anspruch 1, dadurch gekennzeichnet, daß der Oszillator mit einem oder mehreren Schwingungswandlern versehen ist, die an seiner Oberfläche angeordnet sind.

4. Einrichtung nach Anspruch 1, dadurch gekennzeichnet, daß die Schwingungswandler an den Stirnseiten des Oszillators angeordnet sind, während die Kugeln an den Oszillatorkörper in Schwingungsknotenpunkten angedrückt sind.

5. Einrichtung nach Anspruch 1, dadurch gekennzeichnet, daß der Oszillator mit einem Schwingungswandler versehen ist, der sich auf seiner gesamten Oberfläche befindet.

6. Einrichtung nach Ansprüchen 1,3,4,5, dadurch gekennzeichnet, daß die Schwingungswandler aus Piezoelementen ausgeführt ist.

7. Einrichtung nach Ansprüchen 1 bis 6, dadurch gekennzeichnet, daß der Oszillator in Form eines Zylinders ausgebildet ist.

8. Einrichtung nach Ansprüchen 1 bis 7, dadurch gekennzeichnet, daß der Oszillator in Form einer Kugel ausgebildet ist.

9. Einrichtung nach Ansprüchen 1 bis 8, dadurch gekennzeichnet, daß der Oszillator hohl ausgebildet ist.

10. Einrichtung nach Ansprüchen 1 bis 9, dadurch gekennzeichnet, daß der Oszillator mit einem innenliegenden Steg ausgeführt ist.

11. Einrichtung nach Ansprüchen 1 bis 10, dadurch gekennzeichnet, daß der Steg eine Öffnung aufweist.

12. Einrichtung nach Ansprüchen 1 bis 11, dadurch gekennzeichnet, daß die Kugeln gegenüber dem Steg angeordnet sind.

13. Einrichtung nach Ansprüchen 1 bis 12, dadurch gekennzeichnet, daß außer den Kontaktstellen die Oberflächen der Kugeln und Elektroden isoliert sind.

14. Einrichtung nach Ansprüchen 1 bis 13, dadurch gekennzeichnet, daß das Verhältnis des Kugeldurchmessers zum Oszillatordurchmesser $1 \times 10^{-2}$ - $5 \times 10^{-1}$ beträgt.

15. Einrichtung nach Ansprüchen 1 bis 14, dadurch gekennzeichnet, daß der Oszillator relativ zu den Kugeln vorschiebbar gelagert ist.

16. Einrichtung nach Ansprüchen 1 bis 15, dadurch gekennzeichnet, daß die Befestigungs- und Andrückelemente innerhalb des Oszillators angeordnet sind.

17. Einrichtung nach Ansprüchen 1 bis 16, dadurch gekennzeichnet, daß sie mit einer an einer der Stirnseiten des Gehäuses angebrachten elastischen Trennwand zur Isolierung des zu untersuchenden Mediums von dem äußeren Medium versehen ist.

18. Einrichtung nach Ansprüchen 1 bis 17, dadurch gekennzeichnet, daß sie mit einem Hochdruckgefäß mit elektrischen Durchführungen, die mit den Stromanschlüssen des Gehäuses verbunden sind, und mit einem eine Öffnung aufweisenden Dichtungsdeckel, der mit einem Feuchtigkeitsabsorber und/oder einem Filter bestückt ist, ausgestattet ist.

19. Einrichtung nach Ansprüchen 1 bis 18, dadurch gekennzeichnet, daß die Mittel zur Erregung von Schwingungen des Oszillators und zur Signalregistrierung einen Vorverstärker-Kompensator, bei dem der eine Eingang mit dem Ausgang des Oszillators und der andere mit dessen Eingang verbunden ist, ein Phasendrehglied, bei dem der eine Eingang mit dem Ausgang des Vorverstärker-Kompensators und der andere mit dem Ausgang eine Meß- und Steuerungsblocks verbunden ist, ein System der automatischen Verstärkungsregelung, bei dem der eine Eingang mit dem Ausgang des Phasendrehglieds und der andere mit dem Ausgang des Vorverstärker-Kompensators verbunden ist, einen Integrator, dessen Eingang mit dem Ausgang des Systems der automatischen Verstärkungsregelung und der Ausgang mit dem Eingang des Oszillators verbunden ist, einen Diskriminator, dessen Eingang mit dem Ausgang des Vorverstärker-Kompensators und der Ausgang mit dem Eingang des Meß- und Steuerungsblocks verbunden ist, den Meß- und Steuerungsblock, dessen Ausgang an eine ERM angeschlossen ist, eine Programmierunterstützung für die ERM enthalten.

FIG.1

FIG.2

FIG.3

FIG.7

FIG.4

FIG.5

FIG.8

FIG.6

FIG.9

FIG.10

FIG.11

FIG.12

FIG.13

FIG.14

FIG.15

FIG.16

FIG.17

FIG.18

13

FIG.19

FIG.20

14

FIG. 21

# INTERNATIONAL SEARCH REPORT

| | |
|---|---|
| | International application No. |
| | PCT/RU 93/00172 |

**A. CLASSIFICATION OF SUBJECT MATTER**

Int. Cl.$^5$    G01N 11/16

According to International Patent Classification (IPC) or to both national classification and IPC

**B. FIELDS SEARCHED**

Minimum documentation searched (classification system followed by classification symbols)

Int. Cl.$^5$    G01N 9/00, 11/00, 11/14, 11/16

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US, A, 4741200 (FORD MOTOR COMPANY) 3 May 1988 (03.05.88) | 1,19 |
| A | EP, A2, 0304283 (SEIKO INSTRUMENTS INC.) 22 February 1989 (22.02.89) | 1-5,19 |
| A | GB, A, 1254665 (EUROPEAN ATOMIC ENERGY COMMUNITY (EURATOM), 24 November 1971 (24.11.71) | 1 |
| A | SU, A1, 1704025 (Kursky gosudarstvenny meditsinsky institut), 7 January 1992 (07.01.92) | 1-6 |
| A | SU, A, 930075 (Institut teplo- i massoobmena im. A.V. Lykova), 23 May 1982 (23.05.82) | 1,7 |

./.

| | | |
|---|---|---|
| ☑ | Further documents are listed in the continuation of Box C. | ☐   See patent family annex. |

\*   Special categories of cited documents:

"A"   document defining the general state of the art which is not considered to be of particular relevance

"E"   earlier document but published on or after the international filing date

"L"   document which may throw doubts on priority claim(s) or which is cited to establish the publication date of another citation or other special reason (as specified)

"O"   document referring to an oral disclosure, use, exhibition or other means

"P"   document published prior to the international filing date but later than the priority date claimed

"T"   later document published after the international filing date or priority date and not in conflict with the application but cited to understand the principle or theory underlying the invention

"X"   document of particular relevance; the claimed invention cannot be considered novel or cannot be considered to involve an inventive step when the document is taken alone

"Y"   document of particular relevance; the claimed invention cannot be considered to involve an inventive step when the document is combined with one or more other such documents, such combination being obvious to a person skilled in the art

"&"   document member of the same patent family

| Date of the actual completion of the international search | Date of mailing of the international search report |
|---|---|
| 11 February 1994 (11.02.94) | 16 February 1994 (16.02.94) |

| Name and mailing address of the ISA/ RU | Authorized officer |
|---|---|
| | |
| Facsimile No. | Telephone No. |

Form PCT/ISA/210 (second sheet) (July 1992)

C (Continuation).   DOCUMENTS CONSIDERED TO BE RELEVANT

| Category* | Citation of document, with indication, where appropriate, of the relevant passages | Relevant to claim No. |
|---|---|---|
| A | SU, A1, 1684627 (Nauchno-proizvodstvenroe obiedinenie "Vsesojuzny nauchno- issledovatelsky institut fiziko-tekhnicheskikh ı radio-tekhnicheskikh izmereny"), 15 October 1991 (15.10.91) | 1,4,19 |
| A | SU, A, 198040 (Leningradsky elektrotekhnichesky institut im. V.I. Ulyanova), 8 August 1967 (08.08.67) | 1 |
| A | JP, B, 61-7251, 3 May 1986 (03.05.86) | 1,19 |
| A | JP, B, 61-7252, 3 May 1986 (03.05.86) | 1,19 |
| A | JP, B, 61-7253, 3 May 1986 (03.05.86) | 1,19 |